Europäisches Patentamt

European Patent Office

Office européen des brevets

(19)

(11) Veröffentlichungsnummer: **0 492 540 A1**

# (12) EUROPÄISCHE PATENTANMELDUNG

(21) Anmeldenummer: **91122010.1**

(22) Anmeldetag: **20.12.91**

(51) Int. Cl.5: **C01C 1/10**, B01D 53/34, C02F 9/00, C02F 1/58

(30) Priorität: **21.12.90 DE 4041379**

(43) Veröffentlichungstag der Anmeldung:
**01.07.92 Patentblatt 92/27**

(84) Benannte Vertragsstaaten:
**AT BE CH DE DK ES FR GB IT LI LU NL SE**

(71) Anmelder: **MARTIN GmbH für Umwelt- und Energietechnik**
**Leopoldstrasse 248**
**W-8000 München 40(DE)**
Anmelder: **TECHFORM ENGINEERING AG**
**Gheidstrasse 151**
**CH-8105 Watt(CH)**

(72) Erfinder: **Martin, Walter Josef, Dipl.-Ing.**
**Leebergstrasse 40**
**W-8180 Tegernsee(DE)**
Erfinder: **Martin, Johannes Josef Edmund, Dipl.-Ing.**
**St. Heinricherstrasse 55**
**W-8124 Seeshaupt(DE)**
Erfinder: **Hörler, Stefan**
**Gheidstrasse 151**
**CH-8105 Watt(CH)**
Erfinder: **Nikolaus, Thomas**
**Kaltbrunnerstrasse 11**
**W-7753 Allensbach(DE)**

(74) Vertreter: **Zmyj, Erwin, Dipl.-Ing.**
**Rosenheimer Strasse 52**
**W-8000 München 80(DE)**

(54) **Verfahren zum Rückgewinnen bzw. zum Entsorgen von Ammoniak bzw. Ammoniumverbindungen aus Staubgemischen und Waschwässern.**

(57) Zum Rückgewinnen bzw. Entsorgen von Ammoniak bzw. Ammonium-Verbindungen aus Staubgemischen und Waschwässern, die bei Verbrennungsprozessen, der nachfolgenden Gaskühlung und/oder Gasreinigung anfallen, werden die anfallenden Stäube mit einer Temperatur, die niedriger oder gleich ist derjenigen Temperatur, mit der die Stäube den Verbrennungs-, Kühl- oder Reinigungsprozeß verlassen, in einem geschlossenen System chargenweise mit Wasser gemischt und die dabei entstehenden Brüden unter Vakuum abgezogen. Die Abwässer werden mit einem Stoff oder einem Stoffgemisch aus der Gruppe der Zeolithe als Behandlungsmedium in intensiven Kontakt gebracht.

EP 0 492 540 A1

Die Erfindung bezieht sich auf ein Verfahren zum Rückgewinnen bzw. zum Entsorgen von Ammoniak bzw. Ammonium-Verbindungen aus Staubgemischen und Waschwässern, die bei Verbrennungsprozessen und der nachfolgenden Gaskühlung und/oder Gasreinigung anfallen.

Bei der Behandlung von Abgasen aus Verbrennungsprozessen zur Minderung der Stickoxid-Konzentration wird entweder Ammoniak vor einem Reduktionskatalysator dem Gasstrom zugeführt (SCR-Prozeß), oder es wird Ammoniak bzw. ein Stoff, der unter Temperatureinwirkung Ammoniak oder Ammonium-Verbindungen bildet (z.B. Harnstoff, Hirschhornsalz, o.ä.) in den Gasstrom im Temperaturbereich oberhalb 700°C eingedüst (SNCR-Prozeß). In beiden Fällen wird ein Teil des Ammoniaks oder der Ammonium-Verbindungen nicht bei der Reduktionreaktion des $NO_x$ verbraucht und als sogenannter Ammoniakschlupf mit den Abgasen ausgetragen. Dies kann sowohl zu einer Belastung der Athmosphäre als auch der nachgeschalteten Abgasreinigungeinrichtungen führen, wenn Ammoniak bzw. Ammonium-Verbindungen (Ammoniumchlorid, Ammoniumsulfat, Ammoniumbisulfat) mit den Stäuben aus einer Filteranlage ausgeschleust werden oder sich im Waschwasser eines Gaswäschers anreichern.

Eine Abscheidung der Ammonium-Salze, die im Abgasweg bei Temperaturen unterhalb 300°C gebildet werden, kann zwar vor allem mit Tuchfiltern sehr effektiv durchgeführt werden, jedoch ergeben sich bei der weiteren Behandlung dieser Filterstäube Probleme. Die Probleme bestehen darin, daß die Filterstäube zu ihrer besseren Handhabung mit Wasser angefeuchtet werden. Hierbei geben die Ammonium-Salze Ammoniak ab, das in die Athmosphäre entweicht. Um dieses unkontrollierte Entweichen von Ammoniak, das auch bei einer späteren Deponierung auftreten kann, zu verhindern, können die Filterstäube nach dem Stand der Technik einem Stripp-Vorgang unterworfen werden, bei dem Ammoniak weitestgehend ausgetrieben wird. Bei diesem Strippen werden Filterstäube jedoch mit Dampf oder elektrisch erhitzt und eventuell angefeuchtet, wodurch aber auch Schwermetalle und deren Verbindungen, insbesondere Quecksilber, gasförmig entweichen, was zu weiteren Umweltproblemen führt.

Aufgabe der Erfindung ist es, ein Verfahren anzugeben, mit dessen Hilfe das in Form von Ammonium-Salzen in Staubgemischen enthaltene Ammoniak zurückgewonnen werden kann. Außerdem sollen auch Ammoniak bzw. Ammonium-Verbindungen, die im Waschwasser eines dem Staubfilter nachgeschalteten Naßwäschers zu finden sind, abgeschieden bzw. zurückgewonnen werden können und zwar möglichst unter eine Restkonzentration von höchstens 10 mg/l.

Diese Aufgabe wird erfindungsgemäß durch die im Anspruch 1 angegebenen Maßnahmen gelöst. Durch die chargenweise Behandlung der Staubgemische im geschlossenen System, d.h. in geschlossenen Mischern, wird das bei der Anfeuchtung entweichende Ammoniak unter Vakuum abgesaugt, wodurch ein unkontrolliertes Entweichen in die Atmosphäre verhindert wird. Wesentlich ist hierbei der Vorteil, daß keine anderen Schadstoffe, z.B. Schwermetalle, freigesetzt werden, da mit niedrigen Temperaturen gearbeitet wird.

Um möglichst alles in den Staubgemischen in gebundener Form enthaltene Ammoniak zurückzugewinnen, empfiehlt es sich, den Wasseranteil beim Anfeuchten der Staubgemische über das normalerweise zur transportgerechten Anfeuchtung erforderliche Maß hinaus, d.h. auf einen Wassergehalt zwischen 25 und 40 Gew. %, zu erhöhen. Insbesondere führt auch eine Erhöhung des Vakuums zu einem verstärkten Entweichen des Ammoniaks aus diesen festen Verbindungen.

Die Rückgewinnung von Ammoniak aus den Staubgemischen ist dann besonders wirkungsvoll, wenn der pH-Wert der Stäube größer als zehn ist.

Wenn die Staubgemische aus einem Abgasreinigungsverfahren stammen, das einem Verbrennungsprozeß und einer Heißgasentstickungsanlage (SNCR-Verfahren) nachgeschaltet ist, so empfiehlt es sich in weiterer Ausgestaltung der Erfindung, das rückgewonnene Ammoniak dem Abgasreinigungsprozeß wieder zuzuführen, wodurch die Menge der für die Stickoxidreduzierung neu einzusetzenden Chemikalien verringert werden kann.

Für den Fall, daß der Filterung von Abgasen eine Gaswäsche nachgeschaltet ist, bei der die Gase durch Zugabe von Wasser, Kalkmilch oder Natronlauge behandelt werden, findet eine weitere Abscheidung von Ammoniumsalzen aus den Abgasen statt. Diese Ammonium-Verbindungen können nun wiederum nicht mit dem Abwasser ausgeschleust werden, da hiermit Umweltbelastungen im Vorfluter verbunden sind. Für den Fall einer abwasserlosen Naßwäsche mit Eindampfung der Waschwässer in einem Reaktor sind diese Ammoniumverbindungen ebenfalls störend, da es zu einer langsamen Aufkonzentrierung kommt, die ab einer gewissen Größenordnung zum Anstieg der Ammonium-Gaskonzentration im Abgas nach den Wäschern führt. Dem Stand der Technik entsprechend wird dem ebenfalls mittels Strippung der Waschwässer begegnet. Das bedeutet, daß das Waschwasser durch Zuführung von Energie (Dampf, elektrische Energie) so weit erhitzt wird, daß Ammoniak dampfförmig entweicht. Auch hier treten neben hohen Aufwendungen für die Installation und den Betrieb einer solchen Einrichtung Schwierigkeiten mit dem Entweichen von anderen Schadstoffen, vor allem Quecksilberverbindungen, auf.

Zur Lösung dieses Problems werden die Abwässer mit Zeolithen in intensieven Kontakt gebracht, wobei es besonders vorteilhaft ist, die Waschwässer durch eine Kolonne mit einer Schüttung aus einem Stoff oder Stoffgemisch aus der Gruppe der Zeolithe durchzuleiten. Die darin befindlichen Zeolithe werden vor dem Einsatz so aktiviert, daß sie Ammonium-Verbindungen mit hoher Trennschärfe aufnehmen. Versuche haben ergeben, daß auf diese Weise Rest-Ammoniumgehalte von weniger als 5 mg/l ohne weiteres möglich sind.

Nach der weitgehenden Beladung der Zeolithe mit Ammonium-Ionen bzw. Ammoniak, können diese thermisch, z.B. durch Dampfstrippung, durch Austreiben von Ammoniak regeneriert werden. Das ausgetriebene Ammoniak kann einer Brüdenkondensation einer SNCR-Entstickungsanlage zugeführt werden. Es ist aber auch möglich, eine thermische Zerstörung des Ammoniaks herbeizuführen, indem die beladenen Zeolithe dem Verbrennungsprozeß zur Entsorgung zugeführt werden, d.h. die Zeolithe werden in den Brennraum einer Verbrennungsanlage eingeführt.

Um gute Vorraussetzungen für die Rückgewinnung von Ammoniak aus den Waschwässern zu schaffen, sollte dieses vor dem Zusammenbringen mit den Zeolithen auf einen pH-Wert gebracht werden, der größer als zwei und vorzugsweise größer als vier ist.

**Patentansprüche**

1. Verfahren zum Rückgewinnen bzw. zum Entsorgen von Ammoniak bzw. Ammonium-Verbindungen aus Staubgemischen und Waschwässern, die bei Verbrennungsprozessen, der nachfolgenden Gaskühlung und/oder Gasreinigung anfallen, **dadurch gekennzeichnet**, daß die anfallenden Stäube mit einer Temperatur, die niedriger oder gleich ist derjenigen Temperatur, mit der die Stäube den Verbrennungs-, Kühl- oder Reinigungsprozeß verlassen, in einem geschlossenen System chargenweise mit Wasser gemischt und die dabei entstehenden Brüden unter Vakuum abgezogen werden, und daß die Abwässer mit einem Stoff oder einem Stoffgemisch aus der Gruppe der Zeolithe als Behandlungsmedium in intensiven Kontakt gebracht werden.

2. Verfahren nach Anspruch 1, **dadurch gekennzeichnet,** daß zur Rückgewinnung von Ammoniak aus den Staubgemischen, der Wassergehalt beim Anfeuchten der Staubgemische zwischen 25 und 40 Gew.% eingestellt wird.

3. Verfahren nach Anspruch 1 oder 2, **dadurch gekennzeichnet** daß zur Erhöhung der auszutreibenden Ammoniakmenge aus den Staubgemischen, das Vakuum erhöht wird.

4. Verfahren nach einem der Ansprüche 1 bis 3, **dadurch gekennzeichnet,** daß der pH-Wert der Stäube größer als zehn ist oder auf einen Wert größer als zehn eingestellt wird.

5. Verfahren nach einem der Ansprüche 1 bis 4, **dadurch gekennzeichnet,** daß das rückgewonnene Ammoniak dem Abgasreinigungsprozeß wieder zugeführt wird.

6. Verfahren nach Anspruch 1, **dadurch gekennzeichnet**, daß die Abwässer durch eine Schüttung aus einem Stoff oder Stoffgemisch aus der Gruppe der Zeolithe als Behandlungsmedium geleitet werden.

7. Verfahren nach Anspruch 1, **dadurch gekennzeichnet**, daß ein speziell aktivierter Zeolith verwendet wird, der vorzugsweise Ammonium-Ionen bindet.

8. Verfahren nach Anspruch 1 oder 6, **dadurch gekennzeichnet,** daß der mit Ammonium-Ionen beladene Zeolith thermisch durch Austreiben von Ammoniak regeneriert wird.

9. Verfahren nach einem der Ansprüche 1 oder 6 bis 8, **dadurch gekennzeichnet,** daß der mit Ammonium-Ionen beladene Zeolith dem Verbrennungsprozeß zur Entsorgung zugeführt wird.

10. Verfahren nach Anspruch 1 oder 6, **dadurch gekennzeichnet,** daß das Abwasser vor dem Zusammenbringen mit dem Stoff oder dem Stoffgemisch aus der Gruppe der Zeolithe auf einen pH-Wert größer als 2 vorzugsweise größer als 4 eingestellt wird.

Europäisches Patentamt

**EUROPÄISCHER RECHERCHENBERICHT**

Nummer der Anmeldung

EP    91 12 2010

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 292 012 (SIEMENS AG BERLIN) <br> * Ansprüche 1,4 * <br> --- | 1,4,5 | C01C1/10 <br> B01D53/34 <br> C02F9/00 <br> C02F1/58 |
| Y | US-A-4 093 544 (D.S. ROSS) <br> * Spalte 10, Zeile 17 - Zeile 49; Anspruch 1; Abbildung 2 * <br> --- | 1,4,5 | |
| A | DE-A-1 792 027 (VEB INGENIEURTECHNISCHES ZENTRALBURO MINERALÖLE UND ORG. GRUNDSTOFFE) <br> * Anspruch 1 * <br> --- | 1-5 | |
| A | EP-A-0 309 742 (DEUTSCHE BABCOCK ANLAGEN AG) <br> * Zusammenfassung * <br> --- | 1-5 | |
| X | DE-A-3 530 498 (H. SCHADE) <br> * Spalte 1, Zeile 64 - Spalte 2, Zeile 17; Anspruch 1 * <br> --- | 6-10 | |
| A | CHEMICAL ABSTRACTS, vol. 82, no. 4, 27. Januar 1975, Columbus, Ohio, US; abstract no. 21460H, Seite 319 ; Spalte 1 ; * Zusammenfassung * & JP-A-7 478 676 (SANGA, SEIJI) 29. Juli 1974 <br> --- | 6-9 | |
| A | CHEMICAL ABSTRACTS, vol. 89, 1987, Columbus, Ohio, US; abstract no. 64695A, Seite 304 ; Spalte 1 ; * Zusammenfassung * & JP-A-77 144 160 (KANEGAFUCHI CHEMICAL INDUSTRY CO. LTD.) 1. Dezember 1977 <br> ----- | 6-10 | |

**RECHERCHIERTE SACHGEBIETE (Int. Cl.5)**

C01C
B01D
C02F

Der vorliegende Recherchenbericht wurde für alle Patentansprüche erstellt

| Recherchenort | Abschlußdatum der Recherche | Prüfer |
|---|---|---|
| DEN HAAG | 02 APRIL 1992 | REEOIJK A.M.E. |